# EUROPEAN PATENT APPLICATION

(11) **EP 0 936 770 A2**
(43) Date of publication of application: **18.08.1999**
(21) Application number: 99300434.0
(22) Date of filing: 21.01.1999
(51) Int. Cl.: H04J 14/02

(54) **Wavelenght-division-mutliplexing optical communication apparatus**

(30) Priority: 10.02.1998 JP 2858098
(71) Applicant: ALPS ELECTRIC CO., LTD., Ota-ku Tokyo 145 (JP)
(72) Inventor: Someno, Yoshihiro, Shibata-gun, Miyagi-ken (JP)
(74) Representative: Kensett, John Hinton

(57) **Abstract**

With a first set of filters serving as the start points of two tree-type transmission lines, a second set of filters is disposed at the transmission side of the first set of filters, respectively, and a third set of filters is disposed at the reflection side thereof, respectively. A first light-emitting device and a first light-receiving device are disposed at the transmission side of the first set of filters, respectively, and a second light-emitting device and a second light-receiving device are disposed at the reflection side thereof, respectively. A fourth light-emitting device and a fourth light-receiving device are disposed at the transmission side of the third set of filters, respectively, and a third light-emitting device and a third light-receiving device are disposed at the reflection side thereof, respectively. The first set of filters reflect optical signals having wavelengths in the vicinity of a second wavelength and transmit optical signals having the other wavelengths. The second set of filters reflect optical signals having wavelengths in the vicinities of third and fourth wavelengths and transmit optical signals having the other wavelengths. The third set of filters reflect optical signals having wavelengths in the vicinity of the third wavelength and transmit optical signals having the other wavelengths.

## Description

The present invention relates to wavelength-division-multiplexing optical communication apparatuses for performing optical communication by multiplexing a plurality of optical signals having different wavelengths on an optical transmission line.

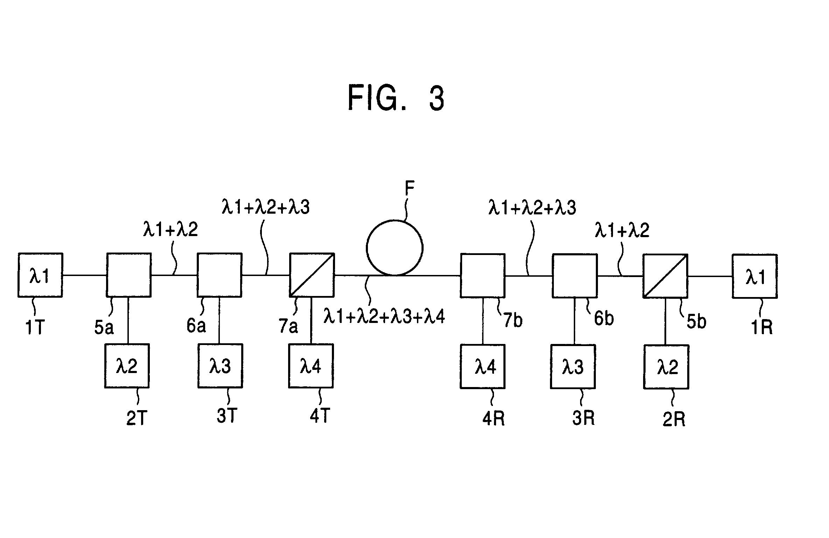

Fig. 3 shows a conventional wavelength-division-multiplexing optical communication apparatus in which transmission lines made by optical fiber F are connected in a bus type. In the apparatus, light-emitting devices 1T, 2T, 3T, and 4T emit light having wavelengths of λ1, λ2, λ3, and λ4, respectively, and light-receiving devices 1R, 2R, 3R, and 4R receive light having wavelengths of λ1, λ2, λ3, and λ4, respectively.

In the wavelength-division-multiplexing optical communication apparatus configured as described above, the optical signal having the wavelength λ1 and the optical signal having the wavelength λ2 are multiplexed by a filter 5a and transmitted through the optical fiber F, the optical signals having the wavelengths λ1 and λ2 and the optical signal having the wavelength λ3 are then multiplexed by a filter 6a and transmitted through the optical fiber F, and the optical signals having the wavelengths λ1, λ2, and λ3 and the optical signal having the wavelength λ4 are further multiplexed by a filter 7a and transmitted through the optical fiber F. Among these optical signals having the wavelengths λ1, λ2, λ3, and λ4, the optical signal having the wavelength λ4 is demultiplexed by a filter 7b, the optical signal having the wavelength λ3 is demultiplexed by a filter 6b among the remaining optical signals having the wavelengths λ1, λ2, and λ3, and then the remaining optical signals having the wavelengths λ1 and λ2 are demultiplexed by a filter 5b.

In the conventional wavelength-division-multiplexing optical communication apparatus, described above, since the transmission lines made by the optical fiber F are configured in a bus type, when the light emitted from the light-emitting device 1T is received by the light-receiving device 1R, for example, the light having a wavelength of λ1 passes through a total of six filters, the filters 5a, 6a, 7a, 7b, 6b, and 5b. This means an optical loss is large. In addition, since each of the optical signals having the wavelengths λ1, λ2, λ3, and λ4 passes through a different number of filters, an optical loss differs for each of the optical signals having the wavelengths λ1, λ2, λ3, and λ4, and dispersion in the optical strengths of the transmission signals also occurs. These problems become more prominent with the increasing numbers of light-emitting devices and light-receiving devices being connected to the transmission lines.

Accordingly, it is an object of the present invention to provide a wavelength-division-multiplexing optical communication apparatus which can reduce the number of branches and dispersion in optical strength.

The foregoing object is achieved according to the present invention through the provision of a wavelength-division-multiplexing optical communication apparatus for performing optical communication by multiplexing a plurality of optical signals having different wavelengths on an optical transmission line, wherein, in order that each optical signal passes through the same number of multiplexing and demultiplexing filters, the optical transmission line is configured in a tree shape with the multiplexing and demultiplexing filters serving as branch points, and multiplexing and demultiplexing filters disposed at higher branch points in the tree-shaped transmission line have spectral characteristics that multiplex and demultiplex more optical signals than those of multiplexing and demultiplexing filters disposed at lower branch points.

With this configuration, when a plurality of optical signals having different wavelengths are multiplexed for optical communication, each optical signal can pass through the same number of branch points, and the optical losses of and dispersion in the optical strengths of the transmission signals can be reduced.

Each of the multiplexing and demultiplexing filters is an optical function film having a function for multiplexing optical signals when they are input to the filter from one side and demultiplexing optical signals when they are input to the filter from the opposite side.

Embodiments of the invention will now be described, by way of example only, with reference to the accompanying drawings, in which:

Fig. 1 is a structural view of a wavelength-division-multiplexing optical communication apparatus according to an embodiment of the present invention.

Fig. 2 is a view showing the spectral characteristics of the filters shown in Fig. 1.

Fig. 3 is a structural view of a conventional wavelength-division-multiplexing optical communication apparatus.

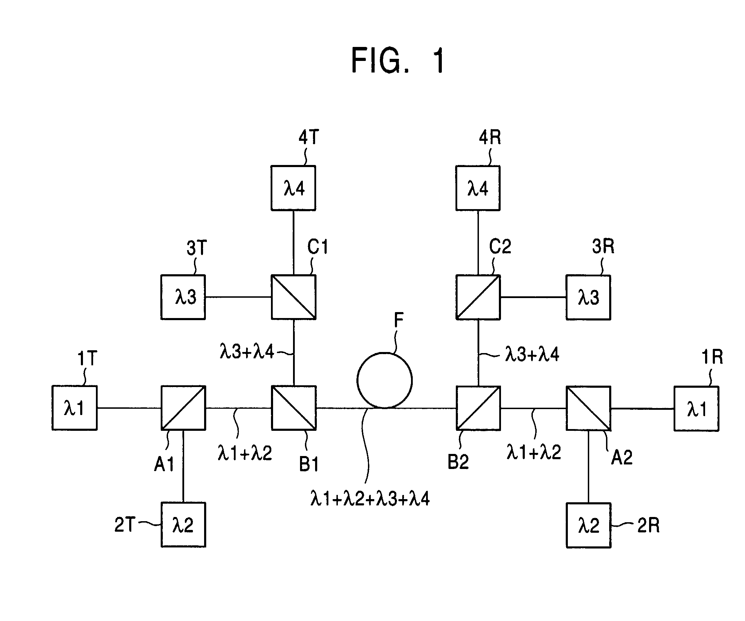

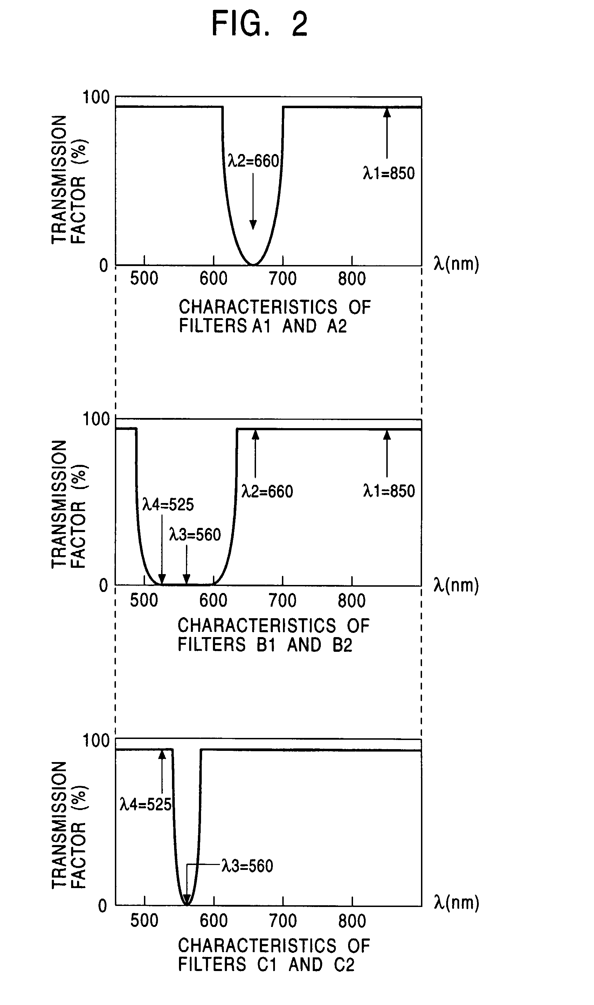

An embodiment will be described by referring to the drawings. Fig. 1 is a structural view of a wavelength-division-multiplexing optical communication apparatus according to an embodiment of the present invention. Fig. 2 is a view showing the spectral characteristics of the filters shown in Fig. 1.

The optical communication apparatus shown in Fig. 1 is configured, for example, so as to multiplex optical signals having the following wavelengths.
λ1 = 850 nm
λ2 = 660 nm
λ3 = 560 nm
λ4 = 525 nm

Therefore, a light-emitting device 1T and a light-receiving device 1R are configured so as to emit and receive light having a wavelength of λ1 = 850 nm, respectively. A light-emitting device 2T and a light-receiving device 2R are configured so as to emit and receive light having a wavelength of λ2 = 660 nm, respectively. A light-emitting device 3T and a light-receiving device 3R are configured so as to emit and receive light having a wavelength of λ3 = 560 nm, respectively. A light-emitting device 4T and a light-receiving device 4R are configured so as to emit and receive light having a wavelength of λ4 = 525 nm, respectively.

Filters A1 and A2 are configured such that they reflect optical signals having wavelengths in the vicinity of the wavelength λ2 = 660 nm and transmit optical signals having the other wavelengths as shown in the upper section of Fig. 2. Filters B1 and B2 are configured such that they reflect optical signals having wavelengths in the vicinities of the wavelengths λ3 = 560 nm and λ4 = 525 nm and transmit optical signals having the other wavelengths as shown in the middle section of Fig. 2. Filters C1 and C2 are configured such that they reflect optical signals having wavelengths in the vicinity of the wavelength λ3 = 560 nm and transmit optical signals having the other wavelengths as shown in the lower section of Fig. 2.

With the filters B1 and B2 serving as the start points of two tree-type transmission lines, respectively, the filters A1 and A2 are disposed at the transmission sides of the filters B1 and B2, respectively, and the filters C1 and C2 are disposed at the reflection sides thereof, respectively. The light-emitting device 1T and the light-receiving device 1R are disposed at the transmission sides of the filters A1 and A2, respectively, and the light-emitting device 2T and the light-receiving device 2R are disposed at the reflection sides thereof, respectively. The light-emitting device 4T and the light-receiving device 4R are disposed at the transmission sides of the filters C1 and C2, respectively, and the light-emitting device 3T and the light-receiving device 3R are disposed at the reflection sides thereof, respectively. The filters B1 and B2 are optical-coupled through fiber F.

Specifically, since the filter A1 reflects optical signals having wavelengths in the vicinity of the wavelength λ2 = 660 nm and transmits optical signals having the other wavelengths, the light having the wavelength λ1 = 850 nm emitted from the light-emitting device 1T passes through the filter, and the light having the wavelength λ2 = 660 nm emitted from the light-emitting device 2T is reflected and multiplexed. Therefore, these two optical signals having the wavelengths λ1 and λ2 are transmitted to the filter B1 through the fiber F. Since the filter C1 reflects optical signals having wavelengths in the vicinity of the wavelength λ3 = 560 nm and transmits optical signals having the other wavelengths, the light having the wavelength λ4 = 525 nm emitted from the light-emitting device 4T passes through the filter, and the light having the wavelength λ3 = 560 nm emitted from the light-emitting device 3T is reflected and multiplexed. Therefore, these two optical signals having the wavelengths λ3 and λ4 are transmitted to the filter B1 through the fiber F. Since the filter B1 reflects optical signals having wavelengths in the vicinities of the wavelengths λ3 = 560 nm and λ4 = 525 nm and transmits optical signal having the other wavelengths, the two optical signals having the wavelengths λ1 and λ2 multiplexed by the filter Al pass through the filter, and the two optical signals having the wavelengths λ3 and λ4 multiplexed by the filter C1 are reflected and multiplexed. Therefore, these four optical signals having the wavelengths λ1, λ2, λ3, and λ4 are transmitted to the filter B2 through the fiber F.

In the same way, the filter B2 transmits the two optical signals having the wavelengths λ1 and λ2 and reflects the two optical signals having the wavelengths λ3 and λ4. Among the two optical signals having the wavelengths λ1 and λ2 which pass through the filter B2, the optical signal having the wavelength λ1 passes through the filter A2 and is received by the light-receiving device 1R, and the optical signal having the wavelength λ2 is reflected by the filter A2 and is received by the light-receiving device 2R. Among the two optical signals having the wavelengths λ3 and λ4 which are reflected by the filter B2, the optical signal having the wavelength λ4 passes through the filter C2 and is received by the light-receiving device 4R, and the optical signal having the wavelength λ3 is reflected by the filter C2 and is received by the light-receiving device 3R.

With this configuration, since each of the four optical signals having the wavelengths λ1 to λ4 transferred through the optical fiber F passes through four filters, the number of required filters is reduced as compared with the bus-type transmission lines described in the conventional case, and the optical losses of the transmission signals are reduced. In addition, since each of the four optical signals having the wavelengths λ1 to λ4 passes through four filters, dispersion in the optical strengths of the transmission signals is also reduced.

In the foregoing embodiment, signals are transmitted unidirectionally from the left-hand side to the right-hand side in Fig. 1. Since each filter multiplexes optical signals input from one side and demultiplexes optical signals input from the opposite side, it is needless to say that the signals can be transmitted bidirectionally.

Optical signals transmitted through the optical fiber F are not limited to those having the four wavelengths λ1 to λ4 described in the above embodiment. The present invention can also be applied to optical signals having five wavelengths or more in the same way.

## Claims

1. A wavelength-division-multiplexing optical communication apparatus for performing optical communication by multiplexing a plurality of optical signals having different wavelengths on an optical transmission line, wherein, in order that each optical signal passes through the same number of multiplexing and demultiplexing filters, the optical transmission line is configured in a tree shape with the multiplexing and demultiplexing filters serving as branch points, and multiplexing and demultiplexing filters disposed at higher branch points in the tree-shaped transmission line have spectral characteristics that multiplex and demultiplex more optical signals than those of multiplexing and demultiplexing filters disposed at lower branch points.
